# EUROPÄISCHE PATENTANMELDUNG

(11) **EP 4 129 069 A1**
(43) Veröffentlichungstag der Anmeldung: **08.02.2023**
(21) Anmeldenummer: 21190127.7
(22) Anmeldetag: 06.08.2021
(51) Int. Cl.: A22C 5/00, A22C 11/02

(54) **FÜLL- UND PORTIONIERSYSTEM FÜR LEBENSMITTELPRODUKTE UND VERFAHREN ZUR DREHZAHLREGELUNG EINER ZUGEHÖRIGEN ZUBRINGER-/ MISCHKURVE UND/ODER GEGENHALTEEINRICHTUNG**

(71) Anmelder: Albert Handtmann Maschinenfabrik GmbH & Co. KG, 88400 Biberach (DE)
(72) Erfinder: RIED, Martin, 89584 Ehingen-Sontheim (DE); WIDMANN, Martin, 88214 Ravensburg (DE)
(74) Vertreter: Grünecker Patent- und Rechtsanwälte PartG mbB

(57) **Zusammenfassung**

Beschrieben werden ein Füll- und Portioniersystem für Lebensmittelprodukte und ein Verfahren zur Drehzahlregelung einer daran vorhandenen Zubringer-/ und/oder Mischkurve und/oder Gegenhalteeinrichtung zum Fördern des Lebensmittelprodukts in einem Fülltrichter. Demnach ist die Zubringer-/ Mischkurve im Fülltrichter mittels eines Motors zum Fördern des Lebensmittelprodukts um sich selbst drehbar und unabhängig von einem nachgeschalteten Förderwerk angetrieben. Auch die Gegenhalteeinrichtung ist im Fülltrichter angeordnet und optional mittels eines Motors zum Fördern des Lebensmittelprodukts um sich selbst drehbar und unabhängig von einem nachgeschalteten Förderwerk angetrieben. Dadurch, dass die Drehzahl wenigstens eines der Motoren in Abhängigkeit von wenigstens einem im Betrieb des Füll- und Portioniersystems gemessenen Maschinen- oder Produktparameter automatisch geregelt wird, ist eine produktschonende Verarbeitung und korrekte Portionierung mit Hilfe des Förderwerks auch bei schwankenden Füllständen, Produktkonsistenzen und/oder Druckverhältnissen im Bereich des Förderwerks möglich.

## Beschreibung

Die Erfindung betrifft ein Füll- und Portioniersystem für Lebensmittelprodukte gemäß Oberbegriff des Anspruchs 1 und ein Verfahren zur Drehzahlregelung einer davon umfassten Zubringer- und/oder Mischkurve und/oder Gegenhalteeinrichtung gemäß Oberbegriff des Anspruchs 8.

Ein gattungsgemäßes Füll- und Portioniersystem für Lebensmittelprodukte, wie beispielsweise Rohwurst, Teig oder Suppe, ist beispielsweise aus der EP 1 892 451 B1 bekannt. Derartige Systeme basieren in der Regel auf Vakuumfüllmaschinen, die bekanntermaßen einen Fülltrichter, eine darin motorisch drehbare Zubringer- und/oder Mischkurve, eine stationäre oder angetriebene Gegenhalteeinrichtung in Form einer Gegenhaltekurve oder -schnecke und ein vakuumgestütztes Förderwerk umfassen, mit dem das Lebensmittelprodukt einem Vorsatzgerät zur Portionierung zugeführt wird, beispielsweise einem Füllwolf. Das Füll- und Portioniersystem kann weitere Komponenten umfassen, wie beispielsweise eine eingangsseitige Beschickungseinheit für das Lebensmitteprodukt und/oder dessen Komponenten und ein ausgangsseitiges Wiegesystem für einzelnen portionierten Lebensmittelprodukte.

Ferner ist es prinzipiell bekannt, das Förderwerk, die Zubringer-/ Mischkurve und die optional angetriebene Gegenhalteeinrichtung mit bedienerseitig einstellbarem Drehzahlverhältnis oder auch unabhängig voneinander anzutreiben. Bei flüssigen Produkten mit stückigen Bestandteilen wie beispielsweise Suppen und Eintöpfen soll so ein Entmischen der unterschiedlichen Zutaten verhindert werden. Ebenso kann man die Zubringer-/ Mischkurve beispielsweise doppelt so schnell laufen lassen wie das Förderwerk, wenn Butterblöcke eingefüllt werden, um diese pastös zu verkneten.

Es hat sich jedoch herausgestellt, dass solche oder noch höhere Drehzahlverhältnisse zu einer dauerhaften Überlastung der Antriebskomponenten führen können und dem fortschreitenden Verarbeitungsprozess oftmals nur ungenügend gerecht werden. Beispielsweise kann sich die Konsistenz der Lebensmittelprodukte während ihrer Verarbeitung im Fülltrichter so stark ändern, dass das vom Bediener ausgewählte Drehzahlverhältnis vorübergehend zu hoch und/oder zu niedrig ist, um eine gleichermaßen schonende Verarbeitung des Lebensmittelprodukts und eine ausreichend gleichmäßige Füllung des nachgeschalteten Förderwerks zu erzielen.

Auch der Füllstand des Lebensmittelprodukts im Fülltrichter kann mit der gewählten Drehzahl der Zubringer-/ Mischkurve und der Gegenhalteeinrichtung ungünstig zusammenwirken. Beispielsweise kann Produkt bei maximalem Füllstand ausgeworfen werden, weil die Zubringerkurve zu schnell im Fülltrichter rotiert. Demgegenüber kann bei nahezu leerem Fülltrichter eine höhere Drehzahl der Zubringer-/ Mischkurve erforderlich sein, um das Vakuum am Förderwerk nicht abreißen zu lassen und dessen Kammern auch gegen Ende des Produktionsprozesses vollständig mit dem Lebensmittelprodukt zu füllen.

Zudem können bestimmte Lebensmittelprodukte, wie beispielsweise Teige, durch eine zu schnell rotierende Zubringerkurve mechanisch überlastet werden. Es wäre dann wünschenswert, die Drehzahl der Zubringer-/ Mischkurve bei normal gefülltem Fülltrichter möglichst zu minimieren und diese erst beim Leerfahren des Fülltrichters, also am Ende des Verarbeitungsprozesses, zu erhöhen und dadurch für eine weiterhin ausreichende Kammerfüllung im Förderwerk zu sorgen.

Es besteht somit Bedarf für bezüglich wenigstens einer der genannten Aufgaben verbesserte Füll- und Portioniersysteme und Verfahren zur Drehzahlanpassung zugehöriger Zubringer-/ Mischkurven und/oder Gegenhalteeinrichtungen.

Die gestellte Aufgabe wird mit einem Füll- und Portioniersystem nach Anspruch 1 und einem Verfahren zur Drehzahlregelung einer darin vorhandenen Zubringer-/ Mischkurve und/oder Gegenhalteeinrichtung gemäß Anspruch 8 gelöst. Bevorzugte Ausführungsformen sind in den Unteransprüchen angegeben.

Das Füll- und Portioniersystem dient demnach der Verarbeitung von pastösen oder im Wesentlichen flüssigen Lebensmittelprodukten, nachfolgend auch Füllgüter genannt, wie beispielsweise Rohwurst, Teig, Suppe oder dergleichen.

Die Füllmaschine umfasst zu diesem Zweck: einen Fülltrichter zum Aufnehmen eines solchen Lebensmittelprodukts und/oder Bestandteilen davon; eine im Fülltrichter mittels eines ersten Motors um sich selbst drehbare Zubringer-/ oder Mischkurve zum Bewegen / Fördern des Lebensmittelprodukts / der Bestandteile im Fülltrichter; ein diesem nachgeschaltetes Förderwerk, das unabhängig von der Zubringer-/ Mischkurve mittels eine zweiten Motors angetrieben ist und insbesondere vakuumunterstützt arbeitet; und eine im Fülltrichter feststehende oder mittels eines dritten Motors um sich selbst drehbare Gegenhalteeinrichtung zur Unterstützung der Förderwirkung auf das Lebensmittelprodukt / die Bestandteile in Richtung des Förderwerks.

Erfindungsgemäß umfasst das Füll- und Portioniersystem eine elektronische / programmierte Regelvorrichtung zur automatischen Drehzahlregelung des ersten Motors und/oder des dritten Motors jeweils unabhängig vom zweiten Motor und in Abhängig von jeweils wenigstens einem im Arbeitsbetrieb des Füll- und Portioniersystems gemessenen Maschinenparameter des Füll- und Portioniersystems und/oder entsprechend gemessenen Produktparameter des verarbeiteten Lebensmittelprodukts oder einer Komponente davon.

Der wenigstens eine Maschinenparameter und/oder Produktparameter kann beispielsweise im Bereich des Fülltrichters, des Förderwerks und/oder dazwischen gemessen werden, also an einer diese Komponenten umfassenden Vakuumfüllmaschine. Die beschriebene Messung ist aber auch an einem darin intergierten Füllwolf und/oder einem Vorschaltgerät der Füllmaschine möglich, wie beispielsweise an einer Würstchenlinie, einem Formsystem, einem Dosiersystem oder dergleichen. Die beschriebene Messung ist ebenso an einem in das Füll- und Portioniersystem integrierten Beschickungssystem für das Lebensmittelprodukt und/oder Bestandteile davon und/oder an einem ausgangsseitigen Wiegesystem zur Gewichtsüberwachung des portionierten Lebensmittelprodukts möglich.

Der gemessene Maschinen- oder Produktparameter ist jeweils als ein Ist-Wert zu verstehen, anhand dessen die Regelvorrichtung des Füll- und Portioniersystem eigenständig entscheiden kann, ob die jeweils eingestellte Drehzahl des Motors weiterhin eingehalten oder aber erhöht / reduziert werden soll. Der jeweilige Ist-Wert kann dann mit einem zugehörigen, beispielsweise produktspezifischen Sollwert oder Sollwertbereich verglichen und im laufenden Produktionsbetrieb daran angepasst werden.

Die Drehzahlregelung stellt die Arbeitsdrehzahl des jeweiligen Motors in Abhängigkeit vom hierfür sensorisch erfassten (wenigstens einen) Maschinenparameter und/oder Produktparameter automatisch ein und korrigiert die Arbeitsdrehzahl gegebenenfalls im laufenden Arbeitsbetrieb. Dies betrifft die Arbeitsdrehzahl bei kontinuierlicher Drehung und/oder bei Drehung im Intervallbetrieb (Puls-Pause-Betrieb, getakteter Betrieb) der Zubringer-/ Mischkurve und/oder Gegenhalteeinrichtung. Die erfindungsgemäße Drehzahlregelung geht somit über ein einfaches Einschalten / Ausschalten des jeweiligen Motors sowie Einhalten einer bedienerseitig vorgegebenen Drehzahl hinaus.

Folglich kann die Drehzahl und damit die Arbeitsgeschwindigkeit der Zubringer-/ Mischkurve und die Drehzahl der Gegenhalteeinrichtung ständig an aktuelle Produktionsbedingungen im Bereich des Füll- und Portioniersystems angepasst und dadurch sowohl eine geforderte Produktqualität eingehalten als auch ein quantitativ zuverlässiges Füllen und Portionieren erzielt werden.

Die Zubringer-/ Mischkurve kann auf bekannte Weise eine schneckenförmige / wendelförmige Gestalt aufweisen, um durch Rotation Lebensmittelprodukte oder deren Komponenten pastös zu verkneten und deren Zufuhr zum Förderwerk mechanisch zu unterstützen. Man spricht dann in der Regel von einer Zubringerkurve und/oder einem Zubringerkurvenbetrieb. Ebenso kann die Zubringer-/ Mischkurve Mischarme mit Flügeln / Paddeln aufweisen, um im Wesentlichen flüssige Lebensmittelprodukte zu mischen und/oder einer Entmischung enthaltener stückiger Bestandteile entgegenzuwirken. Man spricht dann in der Regel von einer Mischkurve und/oder einem Mischkurvenbetrieb. Die Zubringer-/ Mischkurve kann aber auch für beide und/oder kombinierte Betriebsarten ausgebildet sein.

Die Gegenhalteeinrichtung in Form einer Gegenhaltekurve oder -schnecke kann auf bekannte Weise eine schneckenförmige / wendelförmige Gestalt aufweisen, um durch Stillstand oder Rotation im Zusammenspiel mit der Zubringerkurve Lebensmittelprodukte oder deren Komponenten pastös zu verkneten und deren Zufuhr zum Förderwerk mechanisch zu unterstützen. Man spricht dann in der Regel von einer Gegenhaltekurve.

Das Füll- und Portioniersystem umfasst beispielsweise wenigstens einen an die Regelvorrichtung angeschlossenen Sensor zur Messung des Maschinenparameters oder Produktparameters. Der Sensor ist dann beispielsweise als Drucksensor / Vakuumsensor zur Messung eines im Bereich des Förderwerks herrschenden Drucks / Vakuums ausgebildet und/oder als Füllstandsensor zur Messung eines Füllstands im Fülltrichter und/oder als Auslaufdrucksensor zur Messung eines auslaufseitigen Ausstoßdrucks am Förderwerk und/oder als Kompressionsdrucksensor zur Messung eines auf das Lebensmittelprodukt wirkenden Kompressionsdrucks im Förderwerk und/oder als Einspeisedrucksensor zur Messung eines Einspeisedrucks am Förderwerk und/oder als Bestandteil eines Wiegesystems zur ausgangsseitigen Gewichtsmessung des portionierten Lebensmittelprodukts.

Durch eine mit derartigen Sensoren zusammenwirkende Regelvorrichtung kann beispielsweise einer Strudelwirkung im Mischkurvenbetrieb bei sich leerendem Fülltrichter entgegengewirkt werden, um eine unvollständige Kammerfüllung im Förderwerk zu verhindern. Ebenso kann ein Vakuumabfall durch zu gering verdichtetes Lebensmittelprodukt / Füllgut am Auslauf des Fülltrichters / am Einlauf des Förderwerks entgegengewirkt werden und dadurch eine unvollständige Kammerfüllung im Förderwerk verhindert werden. Ebenso lässt sich vermeiden, dass das Lebensmittelprodukt / Füllgut im Fülltrichter durch die Bewegung der Zubringer-/ Mischkurve überstrapaziert wird, um so beispielsweise ein Verschmieren von Rohwurst oder eine unerwünschte Entgasung von Teig zu verhindern. Ebenso lässt sich einer unzureichenden Geschwindigkeitsanpassung der Zubringer-/ Mischkurve bzw. Gegenhalteeinrichtung an eine schwankende Konsistenz des Lebensmittelprodukts / Füllguts entgegenwirken.

Beispielsweise lässt sich die Ist-Drehzahl des ersten und/oder dritten Motors im laufenden Betrieb ständig an eine Soll-Drehzahl anpassen, die sich gegebenenfalls dynamisch aufgrund der nachfolgend genannten Produktionsumstände ändern kann. Beispielsweise kann die Soll-Drehzahl von der Viskosität des Lebensmittelprodukts / Füllguts, von dessen Füllstand im Fülltrichter, von dessen Empfindlichkeit gegenüber mechanischen Belastungen, vom Ausmaß der Kammerfüllung im Förderwerk und/oder von der Produktverdichtung im Zufluss zum Förderwerk und einem damit einhergehenden Vakuumaufbau im Bereich des Förderwerks abhängen. Derart geänderte Prozessbedingungen können beispielsweise mit einem Füllstandsensor im Bereich des Fülltrichter und/oder mit einem Vakuumsensor im Bereich des Förderwerks festgestellt werden. Das Ausmaß der Kammerfüllung im Förderwerk lässt sich beispielsweise anhand von auslaufseitigen Druckmessungen im Bereich des Förderwerks bestimmen, gegebenenfalls unter Berücksichtigung zugehöriger Kennlinien.

Vorzugsweise ist die Regelvorrichtung zur automatischen Drehzahlerhöhung bei Unterschreiten eines Mindestvakuums im Fülltrichter, Förderwerk und/oder dazwischen und/oder beim Leerfahren des Fülltrichters ausgebildet. Damit lässt sich vermeiden, dass die einzelnen Kammern des Förderwerks ungenügend gefüllt werden und/oder ein gefordertes Vakuum im Bereich des Förderwerks unterschritten wird.

Vorzugsweise ist die Regelvorrichtung ferner zur automatischen Rotationstaktung des Motors im Sinne einer Drehbetrieb-Pause-Regelung / eines Intervallbetriebs in Abhängigkeit von wenigstens einem im Betrieb des Füll- und Portioniersystems gemessenen Maschinen oder Produktparameter ausgebildet. Dies dient in erster Linie einer durchgehend ausreichenden Durchmischung flüssiger Lebensmittelprodukte / Füllgüter, beispielsweise bei der Herstellung von Suppen oder dergleichen. Damit lässt sich der Betrieb der Mischkurve und der Gegenhalteeinrichtung an unterschiedliche Produkteigenschaften, wie beispielsweise Viskosität und/oder mechanische Belastbarkeit des Lebensmittelprodukts flexibel anpassen.

Unter einer Drehbetrieb-Pause-Regelung ist ein getakteter Arbeitsbetrieb des Motors zu verstehen, in dem dieser wiederholt in Intervallen rotiert und angehalten wird. Drehzahlregelung und Rotationstaktung / Drehbetrieb-Pause-Regelung können auch miteinander kombiniert werden.

Die voranstehend beschriebenen Ausführungsformen der Drehzahlregelung und sensorischen Erfassung der Maschinen- und/oder Produktparameter können prinzipiell jeweils für den ersten und/oder dritten Motor ausgebildet sein bzw. entsprechend verwendet werden. Die elektronische Regelvorrichtung ist hierfür auf prinzipiell bekannte Weise geeignet programmiert.

Vorzugsweise ist das Förderwerk ein vakuumgestütztes Flügelzellenförderwerk. Damit lässt sich das Lebensmittelprodukt / Füllgut ansaugen, im Förderwerk komprimieren, gegebenenfalls entgasen und mit geeignetem Ausstoßdruck zur Weiterverarbeitung beispielsweise in einem Füllwolf bereitstellen. Das Förderwerk kann auch als Schneckenförderwerk, Zahnradpumpe oder als Kolbenpumpe gestaltet sein.

Die Gegenhaltekurve kann bekanntermaßen im Wesentlichen als eine sich im Durchmesser nach unten hin verjüngende Wendel ausgebildet sein. Die Gegenhaltekurve kann zu diesem Zweck auch als sogenannte Gegenhalteschnecke ausgebildet sein beispielsweise zum Verdichten von krümeligem Füllgut und/oder für die Verarbeitung besonders zäher Teige.

Die Regelvorrichtung kann ferner dazu eingerichtet / programmiert sein, die Drehzahl des zweiten Motors in Abhängigkeit vom wenigstens einen Maschinen- und/oder Produktparameter, der dann insbesondere ein sensorisch überwachter Zufluss des Lebensmittelprodukts zum Förderwerk ist, zu regeln. Dadurch kann die zweite Drehzahl und damit die Förderleistung des Förderwerks reduziert werden, wenn ein vorgegebener Mindestzufluss des abzufüllenden Lebensmittelprodukts zum Förderwerk nicht mehr ausreichend gewährleistet ist / unterschritten wird. Hierfür kann beispielsweise ein Sensor am Produkteingang des Förderwerks / im zugeordneten Zuführtrichter angeordnet werden.

Fülltrichter, Zubringer-/ Mischkurve, Förderwerk und Regelvorrichtung sind beispielsweise Bestandteile einer Vakuumfüllmaschine für pastöse und/oder flüssige Lebensmittelprodukte / Füllgüter. Das Füll- und Portioniersystem kann aus einer derartigen Vakuumfüllmaschine bestehen oder diese als steuerungstechnisch zentralen Bestandteil umfassen.

Die beschriebene Regelvorrichtung ist dazu ausgebildet, die jeweils bezüglich der Drehzahlregelung und/oder Vakuumregelung beschriebenen Verfahrensschritte auszuführen, also Ist-Werte der Maschinen-/ Produktparameter laufend elektronisch zu verarbeiten, mit zugehörigen Sollwerten / Sollwertbereichen zu vergleichen und auf dieser Grundlage wenigstens den Motor der Zubringerkurve / Mischkurve und/oder der Gegenhalteeinrichtung elektronisch anzusteuern. Entsprechende Ansteuerung des Motors des Förderwerks und/oder der zugehörigen Vakuumpumpe ist ebenso denkbar.

Das beschriebene Verfahren dient zur Drehzahlregelung einer Zubringer-/ Mischkurve und/oder Gegenhalteeinrichtung in einem Füll- und Portioniersystem für Lebensmittelprodukte. Demnach wird / werden ein Lebensmittelprodukt / Füllgut oder Bestandteile davon in einen Fülltrichter eingefüllt, darin von der mittels eines Motors um sich selbst gedrehten Zubringer- und/oder Mischkurve bewegt und von dort einem Förderwerk zugeführt. Das Förderwerk wird hierbei unabhängig von der Zubringer-/ Mischkurve und unabhängig von der Gegenhalteeinrichtung angetrieben.

Erfindungsgemäß misst man dabei am Füll- und Portioniersystem in dessen Arbeitsbetrieb wenigstens einen Maschinen- und/oder Produktparameter und regelt dann davon abhängig die Drehzahl des Motors automatisch. Damit lassen sich die bezüglich des Anspruchs 1 beschriebenen Vorteile erzielen.

Beispielsweise wird der Maschinen- und/oder Produktparameter gemessen, indem ein im Bereich des Förderwerks herrschendes Vakuum und/oder ein Füllstand im Fülltrichter und/oder ein auslaufseitiger Druck am Förderwerk und/oder ein Kompressionsdruck im Förderwerk und/oder ein Einspeisedruck am Förderwerk und/oder ein Gewicht der portionierten Lebensmittelprodukte sensorisch überwacht wird. Damit lassen sich die bezüglich des Anspruchs 2 beschriebenen Vorteile erzielen.

Vorzugsweise wird die Drehzahl in Abhängigkeit von einem Vakuum im Förderwerk geregelt, insbesondere indem die Drehzahl bei Unterschreiten eines zugehörigen Mindestvakuums erhöht und/oder bei Erreichen eines zugehörigen Sollvakuums nach oben hin begrenzt oder reduziert wird. Damit lässt sich zum einen eine geforderte Produktqualität erzielen und zum anderen eine ausreichende Kammerfüllung mit Produkt im Förderwerk bewirken.

Bei einer weiteren günstigen Ausführungsform wird die Drehzahl in Abhängigkeit von einem Ist-Füllstand im Fülltrichter geregelt, insbesondere indem man die Drehzahl erhöht, wenn der Ist-Füllstand weniger als 20% eines dem Fassungsvermögen des Fülltrichters zugeordneten Nenn-Füllstands beträgt, und/oder indem man die Drehzahl nach oben begrenzt oder reduziert, wenn der Ist-Füllstand mehr als 80% des Nenn-Füllstands beträgt. Damit lässt sich einer mechanischen Überlastung des Lebensmittelprodukts / Füllguts und/oder einem Auswerfen aus dem Fülltrichter bei vergleichsweise hohem Füllstand ebenso entgegenwirken wie einem ungenügendem Vakuumaufbau am/im Förderwerk und damit einer ungenügenden Kammerfüllung im Förderwerk.

Bei einer weiteren günstigen Ausführungsform wird die Drehzahl in Abhängigkeit von einem am Einlauf zum Förderwerk gemessenen Einspeisedruck und/oder einem am Auslauf des Förderwerks gemessenen Ausstoßdruck geregelt, insbesondere indem die Drehzahl bei Unterschreiten eines zugehörigen Mindestdrucks erhöht und/oder bei Erreichen eines zugehörigen Solldrucks nach oben hin begrenzt oder reduziert wird. Auch dadurch lässt sich eine an die Konsistenz und/oder mechanische Belastbarkeit des Lebensmittelprodukts / Füllguts angepasste und möglichst vollständige Kammerfüllung im Förderwerk bewirken.

Bei einer weiteren günstigen Ausführungsform wird die Drehzahl in Abhängigkeit von einem Ist-Gewicht und/oder einer Ist-Portionsgröße des portionierten Lebensmittelprodukts / Füllguts insbesondere auf der Grundlage einer daraus berechneten Dichte des Lebensmittelprodukts / Füllguts geregelt. Beispielsweise kann einer zu geringen Dichte entgegengewirkt werden, indem die Drehzahl auf geeignete Weise angehoben wird und umgekehrt. Durch entsprechende Drehzahlanpassung wird die Kammerfüllung im Förderwerk gezielt unterstützt.

Bei einer weiteren günstigen Ausführungsform wird ein im Bereich des Förderwerks herrschendes Vakuum in Abhängigkeit von einem am/im Förderwerk herrschenden Einspeisedruck und/oder Kompressionsdruck und/oder Ausstoßdruck geregelt, insbesondere indem das Vakuum bei Unterschreiten eines zugehörigen Mindestdrucks verstärkt und/oder bei Erreichen eines zugehörigen Solldrucks nach oben hin begrenzt oder abgeschwächt wird. Dadurch lässt sich beispielsweise ein übermäßiges Austrocknen oder Entgasen bestimmter Lebensmittelprodukte / Füllgüter, wie beispielsweise von Teigen oder dergleichen, durch Optimierung des im Förderwerk herrschenden Vakuums verhindem. Die Regelvorrichtung ist dann zur entsprechenden Vakuumregelung ausgebildet.

Bei dem beschriebenen Verfahren wird das Lebensmittelprodukt durch getaktetes und/oder kontinuierliches Drehen der Zubringer-/ Mischkurve und/oder der Gegenhalteeinrichtung gemischt und/oder gefördert und dem Förderwerk demzufolge in pastöser oder flüssiger Form zugeführt. Bei pastösen Lebensmittelprodukten / Füllgütern wird vorzugsweise eine Zubringerkurve verwendet, die im Wesentlichen schneckenförmig bzw. sich im Durchmesser nach unten hin verjüngende Wendel ausgebildet ist. Bei einem flüssigen Lebensmittelprodukt / Füllgut wird vorzugsweise eine Mischkurve verwendet, die beispielsweise mehrere im Fülltrichter umlaufende Flügel / Paddel umfasst.

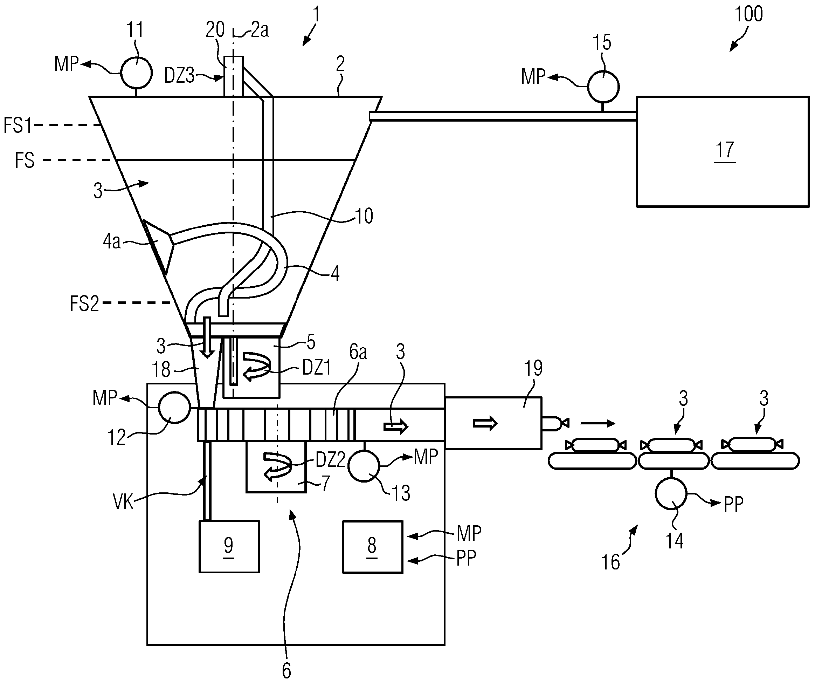

Eine bevorzugte Ausführungsform der Erfindung ist zeichnerisch dargestellt. Die einzige Figur zeigt eine schematische seitliche Ansicht eines Füll- und Portioniersystems für Lebensmittelprodukte, bei denen es sich im Wesentlichen um pastöse oder flüssige Füllgüter handelt, die auch stückige Bestandteile aufweisen können.

Das Füll- und Portioniersystem 100 umfasst als zentralen Bestandteil eine Vakuumfüllmaschine 1 mit einem Fülltrichter 2 zum Aufnehmen eines Lebensmittelprodukts 3 und/oder Bestandteilen davon und mit einer im Fülltrichter 2 um sich selbst drehbaren Zubringer- und/oder Mischkurve 4, die von einem beispielsweise als Servomotor ausgebildeten ersten Motor 5 angetrieben wird. Die Zubringer- und/oder Mischkurve 4 rotiert somit im Arbeitsbetrieb des ersten Motors 5 um die Mittelachse 2a des Trichters 2.

Das Füll- und Portioniersystem 100 umfasst ferner als Bestandteil der Vakuumfüllmaschine 1 ein dem Fülltrichter 2 nachgeschaltetes Förderwerk 6, das vorzugsweise als vakuumgestütztes Flügelzellenförderwerk ausgebildet ist. Das Förderwerk 6 umfasst dann umlaufende Kammern 6a / Flügelzellen, in denen das Lebensmittelprodukt 3 gefördert und dabei auf prinzipiell bekannte Weise komprimiert wird. Das Förderwerk 6 ist mittels eines beispielsweise als Servomotor ausgebildeten zweiten Motors 7 unabhängig von der Zubringer-/ Mischkurve 4 angetrieben.

Das Füll- und Portioniersystem 100 umfasst ferner als Bestandteil der Vakuumfüllmaschine 1 eine elektronische Regelvorrichtung 8 zur automatischen / programmierten Drehzahlregelung des ersten Motors 5 in Abhängigkeit von wenigstens einem im Betrieb des Füll- und Portioniersystems 100 in dessen Bereich gemessenen Maschinenparameter MP und/oder Produktparameter PP.

Schematisch dargestellt ist ferner eine Vakuumpumpe 9 zur Erzeugung eines Vakuums VK im Bereich des Förderwerks 6. Mit dem Vakuum VK wird das Lebensmittelprodukt 3/ Füllgut in den Bereich des Förderwerks 6 gesaugt und die Zuführung des Lebensmittelprodukts 3 dabei gegebenenfalls durch die Zubringer-/ Mischkurve 4 und/oder eine damit zusammenwirkende Gegenhalteeinrichtung 10 unterstützt. Dies gilt insbesondere bei pastösen Lebensmittelprodukten 3. Für flüssige Lebensmittelprodukte 3, insbesondere solche, die zur Entmischung stückiger Bestandteile neigen, kann die Zubringer-/ Mischkurve 4 in nicht dargestellter, aber prinzipiell bekannter Weise Mischflügel / Paddel aufweisen, die im Fülltrichter 2 vom ersten Motor 5 angetrieben dann auf geeignete Weise umlaufen.

Im dargestellten Beispiel umfasst die im Wesentlichen schneckenförmig und/oder wendelförmig verlaufende Zubringer-/ Mischkurve 4 einen Schaber 4a, der an der Innenwand des Fülltrichters 2 entlangläuft und pastöses Lebensmittelprodukt 3 vor sich herschiebt bzw. von der Trichterwand abstreift.

Die Zubringer-/ Mischkurve 4 wirkt mit einer drehfest oder um sich selbst drehbar im Fülltrichter 2 angeordneten Gegenhalteeinrichtung 10 zusammen, die ebenso eine im Wesentlichen schneckenförmige und/oder wendelförmige Gestalt aufweist. Die Zubringer-/ Mischkurve 4 und die Gegenhaltekurven 10 können prinzipiell bekannte Merkmale aufweisen und sind daher nicht im Detail beschrieben.

Die Gegenhalteeinrichtung 10 wird bei drehbarer Ausführungsform von einem beispielsweise als Servomotor ausgebildeten dritten Motor 20 angetrieben. Dieser kann, wie beispielhaft angedeutet ist, im oberen Bereich des Fülltrichters 2 angeordnet sein. Die Gegenhalteeinrichtung 10 rotiert dann im Arbeitsbetrieb des dritten Motors 20 vorzugsweise ebenso um die Mittelachse 2a des Trichters 2.

Mit der entsprechend programmierten Regelvorrichtung 8 kann vorzugsweise wenigstens die Arbeitsdrehzahl DZ1 des ersten Motors 5 oder gegebenenfalls wenigstens die Arbeitsdrehzahl DZ3 des dritten Motors 20 auf der Grundlage sensorisch erfasster Maschinenparameters MP und/oder Produktparameter PP automatisch, also ohne Bedienereingriff, eingestellt / verändert werden. Optional ist dies auch für die Arbeitsdrehzahl DZ2 des zweiten Motors 7 gegeben, also für die Förderleistung des Förderwerks 6.

Die erfindungsgemäße Drehzahlregelung ermöglicht eine flexiblere Anwendung von Zubringer-/ Mischkurven 4 auch für unterschiedliche Produktionsprozesse und/oder Eigenschaften des jeweils zu verarbeitenden Lebensmittelprodukts 3. Anders gesagt reduziert die beschriebene Drehzahlregelung den Bedarf für speziell an bestimmte Prozesse und/oder Lebensmittelprodukte 3 angepasste Zubringer-/ Mischkurven 4 und somit den apparativen Aufwand und den Bedarf für Umrüstung.

Das Füll- und Portioniersystem 100 umfasst ferner wenigstens einen an die Regelvorrichtung 8 angeschlossenen Sensor 11-15 zur Messung eines Maschinenparameters MP und/oder Produktparameters PP.

Im gezeigten Beispiel handelt es sich bei einem ersten Sensor 11 um einen Füllstandsensor zur Überwachung des Füllstands FS des zu verarbeitenden Lebensmittelprodukts 3 / Füllguts im Fülltrichter 2, also zur Messung eines solchen Maschinenparameters MP.

Bei einem zweiten Sensor 12 handelt es sich beispielsweise um einen Drucksensor, der zur Überwachung eines im Bereich des Förderwerks 6 herrschenden Vakuums oder am Eingang des Förderwerks 6 herrschenden Einspeisedrucks ausgebildet sein könnte, also ebenso zur Messung eines entsprechenden Maschinenparameters MP.

Der zweite Sensor 12 könnte ergänzend oder alternativ zur Produktüberwachung ausgebildet sein, beispielsweise den Durchfluss und/oder das Vorhandensein des Lebensmittelprodukts 3 / Füllguts am Eingang zum Förderwerk 6 überwachen (nicht dargestellt). Auch dies wäre ein geeigneter Maschinenparameter MP, auf dessen Grundlage beispielsweise die Arbeitsdrehzahl DZ2 des zweiten Motors 7, also die Förderleistung des Förderwerks 6 im beschriebenen Sinne geregelt werden könnte.

Bei einem dritten beispielhaft dargestellten Sensor 13 handelt es sich um einen Auslaufdrucksensor zur Überwachung eines auslaufseitigen Drucks am Förderwerk 6, also zur Messung eines solchen Maschinenparameters MP. Alternativ kann dieser Sensor auch im Förderwerk 6 zur Messung des Kompressionsdrucks angeordnet sein.

Bei einem beispielhaft dargestellten vierten Sensor 14 handelt es sich um eine Durchlaufwaage als Bestandteil eines Wiegesystems 16 zur ausgangsseitigen Gewichtsüberwachung des portionierten Lebensmittelprodukts 3, also zur Messung eines solchen Produktparameters PP.

Bei einem beispielhaft dargestellten fünften Sensor 15 handelt es sich um einen Durchflussmesser oder Füllstandsensor eines Beschickungssystems 17 für das Lebensmittelprodukt 3 / Füllgut, das auf diese Weise insbesondere in flüssiger Form bereitgestellt werden könnte. Mit dem fünften Sensor 15 wird somit wiederum ein Maschinenparameter MP des Füll- und Portioniersystems 100 gemessen.

Beispielsweise kann mit dem ersten Sensor 11 und/oder mit dem fünften Sensor 15 der aktuelle Füllstand FS des Lebensmittelprodukts 3 / Füllguts im Fülltrichter 2 direkt als Maschinenparameter MP gemessen oder gegebenenfalls aus diesem berechnet werden. Der so ermittelte Ist-Wert des Füllstands FS wird von der Regelvorrichtung 8 dazu verwendet, die Arbeitsdrehzahl DZ1 des ersten Motors 5 bzw. der Zubringer-/ Mischkurve 4 automatisch an den jeweils aktuellen Ist-Wert des Füllstands FS anzupassen. Beispielsweise wird die Arbeitsdrehzahl DZ1 bei relativ hohem Füllstand FS1 automatisch niedriger eingestellt als bei relativ niedrigem Füllstand FS2, wie er beispielsweise beim Leerfahren des Fülltrichters 2 auftritt.

Alternativ oder ergänzend könnte ein im Bereich des Förderwerks 6 beispielsweise mit dem zweiten und/oder dritten Sensor 12, 13 jeweils gemessener Druck dazu verwendet werden, die Arbeitsdrehzahl DZ1 automatisch zu optimieren, um eine produktschonende Füllung / Portionierung des Lebensmittelprodukts 3 / Füllguts und eine durchweg ausreichende Befüllung der einzelnen Kammern 6a zu erzielen. Ist beispielsweise ein der Drehzahlregelung zugrundeliegendes Vakuum VK schwächer als ein zugeordneter Mindestwert, so kann die Arbeitsdrehzahl DZ1 von der Regelvorrichtung 8 automatisch erhöht werden, um dennoch eine vollständige Füllung der Kammern 6a des Förderwerks 6 zuverlässig zu erzielen.

Alternativ oder ergänzend könnte mit dem dritten Sensor 13 überprüft werden, ob ein zur Weiterverarbeitung des Lebensmittelprodukts 3 / Füllguts ausreichender Ausstoßdruck vorliegt oder der Ausstoßdruck gegebenenfalls für das verarbeitete Lebensmittelprodukt 3 / Füllgut zu hoch ist, was ein übermäßiges Ausgasen aus dem Lebensmittelprodukt 3 / Füllgut verursachen könnte.

Ähnliche Messungen wären im Bereich der Kammern 6a / Flügelzellen möglich, um einen Kompressionsgrad des Lebensmittelprodukts 3 / Füllguts zu ermitteln. In beiden Fällen könnte die Regelvorrichtung 8 durch automatische Drehzahlanpassung des ersten Motors 5 den Ist-Wert des auf diese Weise überwachten Maschinenparameters MP (Ausstoßdruck, Kompressionsdruck) innerhalb eines vorgegebenen Sollwertbereichs halten.

Ergänzend oder alternativ könnte die Regelvorrichtung 8 die Dichte des portionierten Lebensmittelprodukts 3 / Füllguts ermitteln, indem ein vom Füll- und Portioniersystem 100 maschinell vorgegebenes Füllvolumen / Portionsvolumen mit einem mittels des vierten Sensors 14 individuell gemessenen Portionsgewicht verrechnet wird. Wird so beispielsweise eine zu geringe Dichte berechnet, die schließlich ein zu geringes Portionsgewicht zur Folge hätte, kann der Kompressionsgrad des Lebensmittelprodukts 3 / Füllguts gegebenenfalls durch Erhöhung der Arbeitsdrehzahl DZ1 des ersten Motors 5 automatisch erhöht werden, da eine Drehzahlerhöhung die Kammerfüllung verbessern und damit eine gewünschte Komprimierung des Lebensmittelprodukts 3 / Füllguts bewirken kann.

Prinzipiell kann die Regelvorrichtung 8 die Arbeitsdrehzahl DZ3 des dritten Motors 20 ebenso wie voranstehend beschrieben automatisch einstellen / anpassen. Dies ist je nach verwendeten Maschinen-/ Produktparametern MP, PP sowohl ergänzend zur Drehzahlregelung des ersten Motors 5 als auch alternativ dazu möglich.

Prinzipiell können der Drehzahlregelung des ersten und/oder dritten Motors 5, 20 die gleichen Maschinen-/ Produktparametern MP, PP zugrunde liegen, aber auch unterschiedliche.

Ergänzend kann die Vakuumpumpe 9 in Abhängigkeit von einem beispielsweise im Bereich eines zwischen Fülltrichter 2 und Förderwerk 6 angeordneten Zuführtrichters 18 mit dem zweiten Sensor 12 gemessenen Einspeisedruck und/oder in Abhängigkeit von einem Kompressionsdruck im Förderwerk 6 und/oder einem Ausstoßdruck am Förderwerk 6 automatisch geregelt werden. Auch diese Vakuumregelung kann in der Regelvorrichtung 8 prinzipiell in Abhängigkeit von wenigstens einem im Bereich des Füll- und Portioniersystems 100 gemessenen Maschinenparameter MP oder Produktparameter PP auf die für die Drehzahlregelung beschriebene Weise erfolgen.

Die Zuordnung der beschriebenen Sensoren 11-15 zu einzelnen Maschinen-/ Produktparametern MP, PP und/oder Bereichen des Füll- und Portioniersystems 100 ist hierbei lediglich als Beispiel zu verstehen. Andere Zuordnungen sind prinzipiell für die Drehzahl- und/oder Vakuumregelung denkbar.

Mit dem Füll- und Portioniersystem 100 kann beispielsweise wie folgt gearbeitet werden.

Das Lebensmittelprodukt 3 / Füllgut kann dem Fülltrichter 2 je nach Rezept und Konsistenz der Bestandteile mittels einer Armhebevorrichtung (nicht dargestellt) schrittweise aus Transportbehältnissen oder dergleichen zugeführt werden und/oder aus einer angeschlossenen Beschickungsanlage 17, die prinzipiell auch ein kontinuierliches Nachfüllen ermöglicht.

Während der Verarbeitung des Lebensmittelprodukts 3 / Füllguts im Fülltrichter 2 wird wenigstens einer der beschriebenen Maschinenparameter MP und/oder Produktparameter PP laufend überwacht und die Arbeitsdrehzahl DZ1 des ersten Motors 5 automatisch daran angepasst. Dies ist nachfolgend für eine Drehzahlregelung in Abhängigkeit vom Füllstand FS im Fülltrichter 2 beschrieben.

Hierzu könnte anfangs eine Produkt- und/oder Prozessauswahl an der Regelvorrichtung 8 vorgenommen werden, um für die Arbeitsdrehzahl DZ1 einen geeigneten Sollwertbereich vorzugeben.

Der Füllstand FS im Fülltrichter 2 kann dann entweder direkt als Maschinenparameter MP vom ersten Sensor 11 am Fülltrichter 2 gemessen und/oder indirekt aus einem mit dem fünften Sensor 15 gemessenen Maschinenparameter MP, beispielsweise einem Durchflusswert am zugehörigen Beschickungssystems 17, ermittelt werden. In beiden Fällen passt die Regelvorrichtung 8 die Arbeitsdrehzahl DZ1 des ersten Motors 5 in Abhängigkeit vom laufend überwachten Füllstand FS automatisch innerhalb eines jeweils zugelassenen Drehzahlbereichs an. Die Drehzahl / Rührgeschwindigkeit der vom ersten Motor 5 angetriebenen Zubringer-/ Mischkurve 4 wird bei relativ hohem Füllstand FS1 dann in der Regel schneller eingestellt als bei relativ niedrigem Füllstand FS2, insbesondere beim Leerfahren des Fülltrichters 2.

Das Lebensmittelprodukt 3 / Füllgut wird von der rotierenden Zubringer-/ Mischkurve 4 in Bewegung gehalten und dabei vom daran ausgebildeten Schaber 4a von der Innenwand des Fülltrichters 2 abgestreift. Sobald der Zufluss zum Förderwerk 6 geöffnet ist, unterstützt die Zubringer-/ Mischkurve 4 das Einspeisen des Lebensmittelprodukts 3 / Füllgut in das mit Vakuum VK beaufschlagte Förderwerk 6, indem beispielsweise der Querschnitt des dazwischenliegenden Zuführtrichters 18 stets vollständig mit dem Lebensmittelprodukt 3 gefüllt bleibt.

Die Formgebung der Gegenhalteeinrichtung 10 ist derart gestaltet, dass sich das Lebensmittelprodukt 3 im Fülltrichter 2 nicht mit der Zubringer-/ Mischkurve 4 (Förderkurve) mitdreht, sondern eine Förderwirkung zum Förderwerk 6 entsteht.

Dieser Effekt kann durch einen Drehantrieb der Gegenhalteeinrichtung 10 verstärkt werden. Die Arbeitsdrehzahl DZ3 des dritten Motors 20 kann dann prinzipiell auf die für den ersten Motor 5 beschriebene Weise von der Regelvorrichtung 8 eingestellt / angepasst werden.

Mit Hilfe des im Bereich des Förderwerks 6 erzeugten Vakuums VK wird das Lebensmittelprodukt 3 angesaugt und durch den Zuführtrichter 18 in die einzelnen Kammern 6a / Flügelzellen des Förderwerks 6 eingefüllt. Beim Umlauf der Kammern 6a / Flügelzellen im Förderwerk 6 wird das Lebensmittelprodukt 3 komprimiert und beispielsweise unter Entgasung eine gewünschte Dichte des Lebensmittelprodukts 3 eingestellt.

Das im Bereich des Förderwerks 6 dabei herrschende Vakuum VK kann beispielsweise vom zweiten Sensor 12 überwacht und als Maschinenparameter MP an die Regelungsvorrichtung 8 übermittelt werden. Diese kann beispielsweise unter Berücksichtigung des Füllstands FS und des im Bereich des Förderwerks 6 herrschenden Vakuums VK die Arbeitsdrehzahl DZ1 des ersten Motors 5 und damit die Rührgeschwindigkeit der Zubringer-/ Mischkurve 4 und/oder die Arbeitsdrehzahl DZ3 des dritten Motors 20 / der Gegenhalteeinrichtung 10 innerhalb eines vorgegebenen Drehzahlbereichs automatisch anpassen.

Folglich werden die Kammern 6a / Flügelzellen stets vollständig mit dem Lebensmittelprodukt 3 gefüllt und somit dessen gezielte und reproduzierbare Komprimierung ermöglicht. Das Lebensmittelprodukt 3 lässt sich daher schonend portionieren und mit der geforderten Dichte herstellen. In prinzipiell entsprechender Weise ist eine Drehzahlregelung auf der Grundlage eines laufend überwachten Ausstoßdrucks, Einspeisedrucks und/oder Kompressionsdrucks im Bereich des Förderwerks 6 möglich.

Nach Portionierung in einem (lediglich stark schematisiert dargestellten) Vorsatzgerät 19 wird das portionierte Lebensmittelprodukt 3 vom vierten Sensor 14, hier von einer Durchlaufwaage eines Wiegesystems 16, portionsweise gewogen und der auf diese Weise gemessene Produktparameter PP, hier das individuelle Portionsgewicht, an die Regelvorrichtung 8 übermittelt.

Wird beispielsweise ein zu geringes Portionsgewicht und damit eine bei vorgegebenem Portionsvolumen zu geringe Dichte des Lebensmittelprodukts 3 festgestellt, so kann die Arbeitsdrehzahl DZ1 des ersten Motors 5 im laufenden Produktionsbetrieb automatisch erhöht werden, um gegebenenfalls die Füllung der einzelnen Kammern 6a / Flügelzellen zu verbessern und damit die Komprimierung des Lebensmittelprodukts 3 / Füllguts auf eine vorgegebene Dichte zu bewirken.

Die beschriebenen Messungen der einzelnen Maschinenparameter MP und Produktparameter PP im laufenden Produktionsbetrieb können prinzipiell beliebig miteinander kombiniert werden und in die beschriebene Drehzahlreglung und optionale Vakuumregelung einfließen.

## Patentansprüche

1. Füll- und Portioniersystem (100) für Lebensmittelprodukte (3), umfassend: einen Fülltrichter (2) zum Aufnehmen eines Lebensmittelprodukts und/oder seiner Bestandteile; eine im Fülltrichter mittels eines ersten Motors (5) um sich selbst drehbare Zubringer- und/oder Mischkurve (4) zum Bewegen des Lebensmittelprodukts / der Bestandteile im Fülltrichter; ein diesem nachgeschaltetes und mittels eines zweiten Motors (7) angetriebenes Förderwerk (6); und eine im Fülltrichter angeordnete Gegenhalteeinrichtung (10) zur Förderunterstützung aus dem Bereich der Zubringer-/ Mischkurve zum Förderwerk, **gekennzeichnet durch** eine Regelvorrichtung (8) zur automatischen Drehzahlregelung des ersten Motors und/oder eines dritten Motors (20) zum Drehantrieb der Gegenhalteeinrichtung jeweils unabhängig vom zweiten Motor und in Abhängigkeit von wenigstens einem im Betrieb des Füll-und Portioniersystems gemessenen Maschinen- oder Produktparameter (MP, PP).

2. Füll- und Portioniersystem nach Anspruch 1, ferner mit wenigstens einem an die Regelvorrichtung (8) angeschlossenen Sensor (11-15) zur Messung des Maschinen- oder Produktparameters (MP, PP) insbesondere in Form eines Vakuumsensors zur Messung eines im Bereich des Förderwerks (6) herrschenden Vakuums und/oder Füllstandsensors zur Messung eines Füllstands (FS) im Fülltrichter (2) und/oder Auslaufdrucksensors zur Messung eines auslaufseitigen Drucks am Förderwerk und/oder Kompressionsdrucksensors zur Messung eines Kompressionsdrucks im Förderwerk und/oder Einspeisedrucksensors zur Messung eines Einspeisedrucks am Förderwerk und/oder als Bestandteil eines Wiegesystems (16) zur ausgangsseitigen Gewichtsmessung des portionierten Lebensmittelprodukts (3).

3. Füll- und Portioniersystem nach Anspruch 1 oder 2, wobei die Regelvorrichtung (8) zur automatischen Drehzahlanpassung bei Unterschreiten eines Mindestvakuums im Fülltrichter (2), Förderwerk (6) und/oder dazwischen und/oder beim Leerfahren des Fülltrichters ausgebildet ist.

4. Füll- und Portioniersystem nach einem der vorigen Ansprüche, wobei die Regelvorrichtung (8) ferner zur automatischen Drehbetrieb-Pause-Regelung des wenigstens des ersten Motors (5) in Abhängigkeit vom wenigstens einem im Betrieb des Füll-und Portioniersystems (100) gemessenen Maschinen- oder Produktparameter (MP, PP) ausgebildet ist.

5. Füll- und Portioniersystem nach wenigstens einem der vorigen Ansprüche, wobei das Förderwerk (6) ein vakuumgestütztes Flügelzellenförderwerk ist.

6. Füll- und Portioniersystem nach wenigstens einem der vorigen Ansprüche, wobei die Regelvorrichtung (8) dazu ausgebildet ist, die Arbeitsdrehzahl (DZ2) des zweiten Motors (7) in Abhängigkeit vom wenigstens einen Maschinen- und/oder Produktparameter (MP, PP), der insbesondere ein sensorisch überwachter Zufluss des Lebensmittelprodukts (3) zum Förderwerk (6) ist, zu regeln und dadurch bei Unterschreiten eines vorgegebenen Mindestzuflusses zu reduzieren.

7. Füll- und Portioniersystem nach einem der vorigen Ansprüche, wobei Fülltrichter (2), Zubringer-/ Mischkurve (4), Gegenhalteeinrichtung (10), Förderwerk (6) und Regelvorrichtung (8) Bestandteile einer Vakuumfüllmaschine (1) für pastöse und/oder flüssige Lebensmittelprodukte (3) sind.

8. Verfahren zur Drehzahlregelung einer Zubringer-/ Mischkurve (4) und/oder einer damit fördertechnisch zusammenwirkenden Gegenhalteeinrichtung (10) in einem Füll- und Portioniersystem (100) für Lebensmittelprodukte, wobei ein Lebensmittelprodukt (3) oder seine Bestandteile in einen Fülltrichter (2) eingefüllt, darin von der mittels eines ersten Motors (5) um sich selbst gedrehten Zubringer- und/oder Mischkurve (4) gegen einen von der Gegenhalteeinrichtung ausgeübten Widerstand bewegt und einem mittels eines zweiten Motors (7) angetriebenen Förderwerk (6) zugeführt wird / werden, **dadurch gekennzeichnet, dass** man dabei im Bereich des Füll- und Portioniersystems wenigstens einen Maschinen- und/oder Produktparameter (MP, PP) misst und abhängig davon die Arbeitsdrehzahl (DZ1, DZ3) des ersten Motors und/oder eines die Gegenhalteeinrichtung drehenden dritten Motors (20) automatisch regelt.

9. Verfahren nach Anspruch 8, wobei der Maschinen- und/oder Produktparameter (MP, PP) gemessen wird, indem ein im Bereich des Förderwerks (6) herrschendes Vakuum und/oder ein Füllstand (FS) im Fülltrichter (2) und/oder ein auslaufseitiger Druck am Förderwerk und/oder ein Kompressionsdruck im Förderwerk und/oder ein Einspeisedruck am Förderwerk und/oder ein Gewicht des portionierten Lebensmittelprodukts (3) und/oder ein Produktzufluss zum Förderwerk sensorisch überwacht wird.

10. Verfahren nach Anspruch 8 oder 9, wobei die Arbeitsdrehzahl (DZ1, DZ3) in Abhängigkeit von einem laufend gemessenen Vakuum im Förderwerk (6) geregelt wird, insbesondere indem die Arbeitsdrehzahl bei Unterschreiten eines Mindestvakuums erhöht und/oder bei Erreichen eines Sollvakuums nach oben hin begrenzt oder reduziert wird.

11. Verfahren nach wenigstens einem der Ansprüche 8 bis 10, wobei die Arbeitsdrehzahl (DZ1, DZ3) in Abhängigkeit von einem laufend ermittelten Füllstand (FS) im Fülltrichter (2) geregelt wird, insbesondere indem die Arbeitsdrehzahl erhöht wird, wenn der ermittelte Füllstand weniger als 20% eines dem Fassungsvermögen zugeordneten Nenn-Füllstands beträgt, und/oder die Arbeitsdrehzahl nach oben hin begrenzt oder reduziert wird, wenn der ermittelte Füllstand mehr als 80% des Nenn-Füllstands beträgt.

12. Verfahren nach wenigstens einem der Ansprüche 8 bis 11, wobei die Arbeitsdrehzahl (DZ1, DZ3) in Abhängigkeit von einem laufend am Einlauf zum Förderwerk (6) gemessenen Einspeisedruck und/oder einem laufend am Auslauf des Förderwerks gemessenen Ausstoßdruck geregelt wird, insbesondere indem die Arbeitsdrehzahl bei Unterschreiten eines zugehörigen Mindestdrucks erhöht und/oder bei Erreichen eines zugehörigen Solldrucks nach oben hin begrenzt oder reduziert wird.

13. Verfahren nach wenigstens einem der Ansprüche 8 bis 12, wobei die Arbeitsdrehzahl (DZ1, DZ3) in Abhängigkeit von einem individuell gemessenen Gewicht und/oder einer individuell gemessenen Portionsgröße des Lebensmittelprodukts (3) insbesondere auf der Grundlage einer daraus berechneten Dichte des Lebensmittelprodukts geregelt wird.

14. Verfahren nach wenigstens einem der Ansprüche 8 bis 13, wobei ferner ein im Bereich des Förderwerks (6) erzeugtes Vakuum (VK) in Abhängigkeit von einem am/im Förderwerk herrschenden Einspeisedruck und/oder Kompressionsdruck und/oder Ausstoßdruck geregelt wird, insbesondere indem das Vakuum bei Unterschreiten eines zugehörigen Mindestdrucks verstärkt und/oder bei Erreichen eines zugehörigen Solldrucks nach oben hin begrenzt oder abgeschwächt wird.

15. Verfahren nach wenigstens einem der Ansprüche 8 bis 14, wobei das Lebensmittelprodukt (3) durch getaktetes und/oder kontinuierliches Drehen der Zubringer-/ Mischkurve (4) gemischt und/oder gefördert und dem Förderwerk (6) demzufolge in pastöser oder flüssiger Form zugeführt wird.
